# EUROPEAN PATENT APPLICATION

(11) **EP 4 727 222 A1**
(43) Date of publication of application: **15.04.2026**
(21) Application number: 24855705.0
(22) Date of filing: 15.08.2024
(51) Int. Cl.: H04W 52/02

(54) **WI-FI WORKING MODE SWITCHING METHOD AND RELATED APPARATUS**

(30) Priority: 18.08.2023 CN 202311052255
(71) Applicant: Huawei Technologies Co., Ltd., Shenzhen, Guangdong 518129 (CN)
(72) Inventor: JIANG, Jian, Shenzhen, Guangdong 518129 (CN); ZHU, Yuhong, Shenzhen, Guangdong 518129 (CN); XIAO, Houfei, Shenzhen, Guangdong 518129 (CN); MENG, Meng, Shenzhen, Guangdong 518129 (CN)
(74) Representative: Körber, Martin Hans
(86) International application number: PCT/CN2024/112376
(87) International publication number: WO 2025/039980

(57) **Abstract**

This application provides a Wi-Fi operating mode switching method and a related apparatus. If an electronic device needs to switch a Wi-Fi module from a first operating mode to a second operating mode whose specification is lower than that of the first operating mode, the electronic device may send an operating mode switching indication to a peer device, to indicate the peer device to switch to the second operating mode. After sending the operating mode switching indication to the peer device, the electronic device may switch to the second operating mode to send a physical frame to the peer device, and keep receiving, in the first operating mode, a physical frame sent by the peer device. When detecting, in the physical frame sent by the peer device, that the peer device has switched to the second operating mode, the electronic device switches an operating mode of the Wi-Fi module to the second operating mode. In this way, when the operating mode of the Wi-Fi module is switched, it can be ensured that the electronic device clearly knows whether the peer device successfully switches the operating mode, to ensure normal data transmission.

## Description

This application claims priority to Chinese Patent Application No. 202311052255.8, filed with the China National Intellectual Property Administration on August 18, 2023 and entitled "WI-FI OPERATING MODE SWITCHING METHOD AND RELATED APPARATUS", which is incorporated herein by reference in its entirety.

### TECHNICAL FIELD

This application relates to the field of wireless communication technologies, and in particular, to a Wi-Fi operating mode switching method and a related apparatus.

### BACKGROUND

With application and development of a wireless fidelity (wireless fidelity, Wi-Fi) protocol, currently, a Wi-Fi protocol is designed for high throughput performance, but is not designed for low power consumption in a medium- and low-traffic scenario. For example, the current Wi-Fi protocol aims at a large bandwidth in terms of bandwidth and a plurality of antennas in terms of a quantity of antennas. Currently, a maximum bandwidth supported in a Wi-Fi 6 protocol is 160 MHz, and a device using the Wi-Fi 6 protocol has two antennas in standard configuration. Therefore, in a data transmission process, a high transmission rate between devices is preferred. In other words, if a plurality of antennas can be used for transmission, a single antenna is not selected for transmission, and if a large bandwidth can be used for transmission, a small bandwidth is not selected for transmission. As a result, power consumption of the device is increased.

### SUMMARY

This application provides a Wi-Fi operating mode switching method and a related apparatus, to ensure that when an operating mode of a Wi-Fi module is switched, an electronic device clearly knows whether a peer device successfully switches an operating mode, and ensure normal data transmission between the electronic device and the peer device.

According to a first aspect, this application provides a Wi-Fi operating mode switching method, including: A first electronic device establishing a first Wi-Fi connection to a second electronic device by using a Wi-Fi module; when an operating mode of the Wi-Fi module is a first operating mode, the first electronic device sends a physical frame to the second electronic device in the first operating mode by using the Wi-Fi module, and receives, in the first operating mode by using the Wi-Fi module, a physical frame sent by the second electronic device; the first electronic device sends a first switching indication to the second electronic device in the first operating mode by using the Wi-Fi module, where the first switching indication indicates the second electronic device to switch to a second operating mode, and a specification of the first operating mode is higher than a specification of the second operating mode; the first electronic device sends a physical frame to the second electronic device in the second operating mode by using the Wi-Fi module, and receives, in the first operating mode, a physical frame sent by the second electronic device; and the first electronic device switches the operating mode of the Wi-Fi module from the first operating mode to the second operating mode after the first electronic device receives, in the first operating mode by using the Wi-Fi module, a physical frame that is sent by the second electronic device in the second operating mode.

In a Wi-Fi device (for example, the first electronic device), a high-specification operating mode may be compatible with a low-specification operating mode. In other words, when a Wi-Fi module in the Wi-Fi device operates in the high-specification operating mode, the Wi-Fi device can support sending and receiving of a physical frame in the high-specification operating mode, and can also support sending and receiving of a physical frame in the low-specification operating mode. However, when the Wi-Fi module in the Wi-Fi device operates in the low-specification operating mode, the Wi-Fi device can only support sending and receiving of a physical frame in the low-specification operating mode.

Therefore, according to the Wi-Fi operating mode switching method provided in this embodiment of this application, when operating mode switching is performed between the first electronic device and another device, the first electronic device can switch to send a physical frame to a peer device in the low-specification operating mode, and the first electronic device keeps receiving, in the high-specification operating mode, a physical frame sent by the peer device, so that it can be ensured that the first electronic device switches the operating mode of the Wi-Fi module to the low-specification operating mode after clearly learning that the another device successfully switches to the low-specification operating mode. This can ensure normal data transmission between the first electronic device and the another device when the operating mode of the Wi-Fi module is switched.

In a possible implementation, that the first electronic device sends the physical frame to the second electronic device in the second operating mode by using the Wi-Fi module, and receives, in the first operating mode, the physical frame sent by the second electronic device specifically includes: After the first electronic device receives, in the second operating mode by using the Wi-Fi module, an acknowledgment frame sent by the second electronic device, the first electronic device sends the physical frame to the second electronic device in the second operating mode by using the Wi-Fi module, and receives, in the first operating mode, the physical frame sent by the second electronic device, where the acknowledgment frame indicates that the second electronic device has received the first switching indication. In this way, it can be ensured that the first electronic device enters a probing phase only after the second electronic device receives the switching indication, sends the physical frame to the second electronic device in the second operating mode by using the Wi-Fi module, and receives, in the first operating mode, the physical frame sent by the second electronic device.

In a possible implementation, the method further includes: After the first electronic device switches the operating mode of the Wi-Fi module from the first operating mode to the second operating mode, the first electronic device sends the physical frame to the second electronic device in the second operating mode by using the Wi-Fi module, and receives, in the second operating mode, the physical frame sent by the second electronic device. In this way, after the Wi-Fi module switches to the second operating mode, the first electronic device may receive and send physical frames in the second operating mode.

In a possible implementation, the first switching indication may be an action (Action) frame, and the Action frame includes any one of the following: a spatial multiplexing power save SMPS frame and an operating mode indicator OMI frame.

In a possible implementation, that the specification of the first operating mode is higher than the specification of the second operating mode includes: A quantity of antennas in the first operating mode is greater than a quantity of antennas in the second operating mode; and/or a channel bandwidth of the first operating mode is greater than a channel bandwidth of the second operating mode; and/or an order of a modulation and coding scheme MCS of the first operating mode is greater than an order of an MCS of the second operating mode.

In a possible implementation, that the first electronic device sends the first switching indication to the second electronic device in the first operating mode by using the Wi-Fi module specifically includes: If the first electronic device meets a determining condition for entering a low power consumption state, the first electronic device sends the first switching indication to the second electronic device in the first operating mode by using the Wi-Fi module, where the determining condition for entering the low power consumption state includes: a remaining power level of the first electronic device is less than a specified power level, and/or a device temperature of the first electronic device is higher than a specified temperature threshold. In this way, the first electronic device may trigger, when entering the low-power consumption state, the Wi-Fi module to switch the operating mode to the low-specification operating mode, to save power consumption.

In a possible implementation, the method further includes: The first electronic device establishes a second Wi-Fi connection to a third electronic device; when the operating mode of the Wi-Fi module is the first operating mode, the first electronic device sends a physical frame to the third electronic device in a third operating mode by using the Wi-Fi module, and receives, in the third operating mode by using the Wi-Fi module, a physical frame sent by the third electronic device, where the specification of the first operating mode is higher than or equal to a specification of the third operating mode; and the first electronic device sends a second switching indication to the third electronic device in the first operating mode by using the Wi-Fi module, where the second switching indication indicates the third electronic device to switch to the second operating mode.

In this way, when the operating mode of the Wi-Fi module of the first electronic device is switched from the first operating mode to the second operating mode in a multi-Wi-Fi connection scenario, the first electronic device may perform operating mode switching handshake with a plurality of peer devices one by one. The operating mode of the Wi-Fi module of the first electronic device is switched to the second operating mode only when the handshake with all peer devices succeeds, to save power consumption.

In a possible implementation, after the first electronic device switches the Wi-Fi module from the first operating mode to the second operating mode, the method further includes: The first electronic device sends a physical frame to the second electronic device and a physical frame to the third electronic device in the second operating mode by using the Wi-Fi module, and receives, in the second operating mode, a physical frame sent by the second electronic device and a physical frame sent by the third electronic device.

In a possible implementation, that the first electronic device switches the Wi-Fi module from the first operating mode to the second operating mode after the first electronic device receives, in the first operating mode by using the Wi-Fi module, the physical frame sent by the second electronic device in the second operating mode specifically includes: The first electronic device switches the Wi-Fi module from the first operating mode to the second operating mode if the first electronic device receives, in the first operating mode by using the Wi-Fi module, the physical frame sent by the second electronic device in the second operating mode and the physical frame sent by the third electronic device in the second operating mode.

In this way, the operating mode of the Wi-Fi module of the first electronic device is switched to the second operating mode only after both the second electronic device and the third electronic device are switched to the second operating mode, so that power consumption can also be reduced in the multi-Wi-Fi connection scenario.

In a possible implementation, after the first electronic device sends, in the first operating mode by using the Wi-Fi module, the first switching indication to the second electronic device, and sends the second switching indication to the third electronic device, the method further includes: If the first electronic device receives, in the first operating mode by using the Wi-Fi module, the physical frame sent by the second electronic device in the first operating mode and the physical frame sent by the third electronic device in the second operating mode, and the specification of the second operating mode is lower than the specification of the third operating mode, the first electronic device sends a third switching indication to the third electronic device, where the third switching indication indicates the third electronic device to switch back to the third operating mode.

In this way, if handshake between the first electronic device and any peer device fails, the first electronic device may choose, based on the specification of the second operating mode, whether to switch back to the first operating mode. In addition, when capabilities of different peer devices are inconsistent, operating mode switching back can be triggered, to ensure that a communication capability is not reduced when the operating mode cannot be switched.

In a possible implementation, after the first electronic device sends the third switching indication to the third electronic device, the method further includes: After receiving, in the first operating mode by using the Wi-Fi module, the physical frame sent by the third electronic device in the third operating mode, the first electronic device keeps the operating mode of the Wi-Fi module as the first operating mode.

In this way, when the switching fails due to inconsistent capabilities of different peer devices, the first electronic device may continue to keep the operating mode of the Wi-Fi module as the first operating mode.

In a possible implementation, after the first electronic device keeps the operating mode of the Wi-Fi module as the first operating mode, the method further includes: The first electronic device receives, in the first operating mode by using the Wi-Fi module, the physical frame sent by the second electronic device in the first operating mode; and the first electronic device receives, in the third operating mode by using the Wi-Fi module, the physical frame sent by the third electronic device in the third operating mode.

In a possible implementation, that the specification of the first operating mode is higher than or equal to the specification of the third operating mode includes: The quantity of antennas in the first operating mode is greater than or equal to the quantity of antennas in the second operating mode; and/or the channel bandwidth of the first operating mode is greater than or equal to the channel bandwidth of the second operating mode; and/or the order of the modulation and coding scheme MCS of the first operating mode is greater than or equal to the order of the MCS of the second operating mode.

According to a second aspect, this application provides an electronic device, which is a first electronic device, and includes one or more processors and one or more memories. The one or more memories are coupled to the one or more processors, the one or more processors include a Wi-Fi module, the one or more memories are configured to store a computer program, and when the one or more processors execute the computer program, the first electronic device is enabled to perform the Wi-Fi operating mode switching method according to any one of the possible implementations of any one of the foregoing aspects.

According to a third aspect, this application provides a chip system, used in a first electronic device. The chip system includes a processing circuit and an interface circuit. The interface circuit is configured to receive code instructions and transmit the code instructions to the processing circuit. The processing circuit is configured to run the code instructions, so that the chip system performs the Wi-Fi operating mode switching method according to any one of the possible implementations of any one of the foregoing aspects.

According to a fourth aspect, this application provides a computer storage medium, including computer instructions. When the computer instructions are run on a processor of an electronic device, the Wi-Fi communication method according to any one of the possible implementations of any one of the foregoing aspects is performed.

According to a fifth aspect, this application provides a computer program product. When the computer program product runs on a computer, the computer is enabled to perform the Wi-Fi operating mode switching method according to any one of the possible implementations of any one of the foregoing aspects.

For beneficial effects of the second aspect to the fifth aspect, refer to the beneficial effects according to any one of the first aspect and the possible implementations of the first aspect. Details are not described herein again.

### BRIEF DESCRIPTION OF DRAWINGS

FIG. 1 is a diagram of an architecture of a communication system according to an embodiment of this application;
FIG. 2 is a diagram of an architecture of another communication system according to an embodiment of this application;
FIG. 3A is a diagram of a structure of an electronic device according to an embodiment of this application;
FIG. 3B is a diagram of a hardware structure of a routing device according to an embodiment of this application;
FIG. 4 is a diagram of a Wi-Fi application scenario according to an embodiment of this application;
FIG. 5 shows a frame interaction process of switching an antenna mode in a static mode by using an SMPS frame according to an embodiment of this application;
FIG. 6 shows a frame interaction process of switching an antenna mode in a dynamic mode by using an SMPS frame according to an embodiment of this application;
FIG. 7 shows a frame interaction process of switching a channel bandwidth by using an OMI frame according to an embodiment of this application;
FIG. 8 shows a frame interaction process of switching an antenna mode by using an OMI frame according to an embodiment of this application;
FIG. 9 is a schematic flowchart of a Wi-Fi operating mode switching method according to an embodiment of this application; and
FIG. 10A to FIG. 10E are a schematic flowchart of a Wi-Fi operating mode switching method in a multi-VAP scenario according to an embodiment of this application.

### DESCRIPTION OF EMBODIMENTS

The technical solutions according to embodiments of this application are clearly and completely described in the following with reference to the accompanying drawings. In the descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

The following describes a communication system provided in an embodiment of this application.

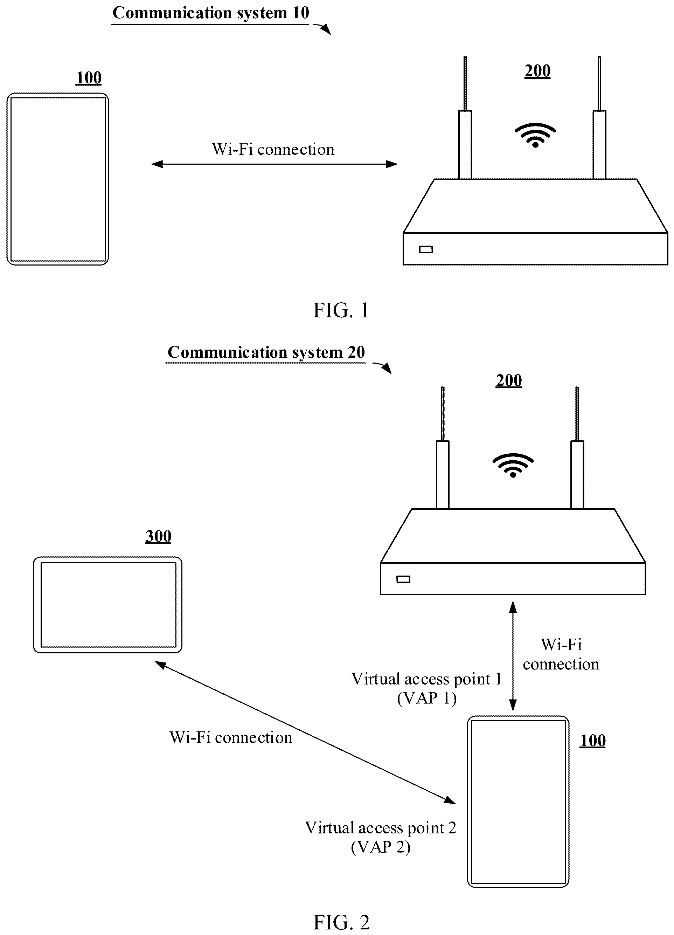

FIG. 1 is a diagram of an architecture of a communication system according to an embodiment of this application.

As shown in FIG. 1, the communication system 10 may include an electronic device 100 and a routing device 200.

The electronic device 100 may establish a Wi-Fi connection to the routing device 200. In the Wi-Fi connection, the electronic device 100 may be used as a station device (station, STA) in the Wi-Fi connection, and the routing device 200 may be used as a wireless access point (access point, AP) in the Wi-Fi connection. A device type of the electronic device 100 may include any one of a smartphone, a smart watch, a smart speaker, a personal computer, a smart television, a tablet computer, a smart socket, an air purifier, a smart desk lamp, a smart air conditioner, a smart curtain, a smart water heater, a router, and the like. A device type of the routing device may include any one of a smartphone, a smart watch, a smart speaker, a personal computer, a smart television, a tablet computer, a smart socket, an air purifier, a smart desk lamp, a smart air conditioner, a smart curtain, a smart water heater, a router, and the like.

FIG. 2 is a diagram of an architecture of another communication system according to an embodiment of this application.

As shown in FIG. 2, the communication system 20 may include an electronic device 100, a routing device 200, and an electronic device 300. The electronic device 100 establishes two Wi-Fi connections to both the routing device 200 and the electronic device 300. Services in the two Wi-Fi connections are independent of each other. To establish the two Wi-Fi connections to both the routing device 200 and the electronic device 300 simultaneously, the electronic device 100 constructs two virtual access points (virtual access point, VAP) in a Wi-Fi module of the electronic device 100. The two VAPs include a virtual access point 1 (VAP 1) and a virtual access point 2 (VAP 2). The VAP 1 may establish a Wi-Fi connection to the routing device 200, and the VAP 2 may establish a Wi-Fi connection to the electronic device 300. For example, the electronic device 100 may establish a Wi-Fi direct connection to the electronic device 300 while establishing a Wi-Fi connection to the routing device 200, to project display data of the electronic device 100 onto the electronic device 300 for display.

The following describes a hardware structure of an electronic device 100 provided in an embodiment of this application.

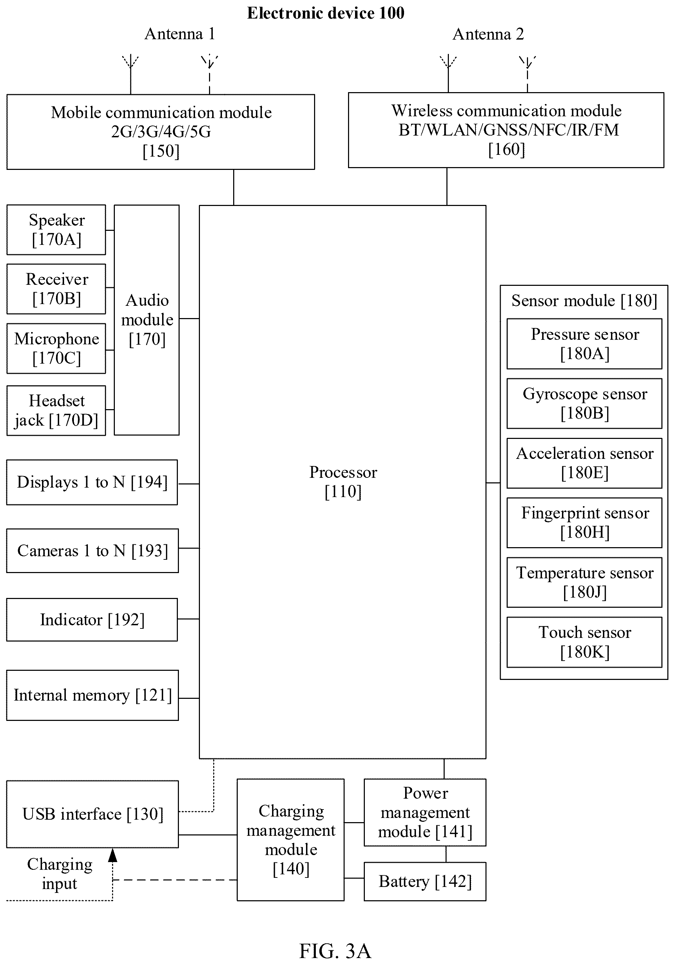

FIG. 3A is a diagram of a structure of an electronic device 100.

The electronic device 100 is used as an example below to describe embodiments in detail. It should be understood that the electronic device 100 shown in FIG. 3A is merely an example, and the electronic device 100 may have more or fewer components than those shown in FIG. 3A, or a combination of some components, or a different component layout. Components shown in FIG. 3A may be implemented by hardware that includes one or more signal processing and/or application-specific inter-integrated circuits, software, or a combination of hardware and software.

The electronic device 100 may include a processor 110, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, an indicator 192, a camera 193, a display 194, and the like. The sensor module 180 may include a pressure sensor 180A, a gyroscope sensor 180B, an acceleration sensor 180E, a fingerprint sensor 180H, a temperature sensor 180J, a touch sensor 180K, and the like.

It can be understood that the structure illustrated in this embodiment of this application does not constitute a specific limitation on the electronic device 100. In some other embodiments of this application, the electronic device 100 may include more or fewer components than those shown in the figure, or a combination of some components, or splits from some components, or a different component layout. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data that has been used or is cyclically used by the processor 110. If the processor 110 needs to use the instructions or the data again, the processor 110 may directly invoke the instructions or the data from the memory. This avoids repeated access, reduces waiting time of the processor 110, and improves system efficiency.

The USB interface 130 is an interface that conforms to a USB standard specification, and may be specifically a mini USB interface, a micro USB interface, a USB Type-C interface, or the like. The USB interface 130 may be configured to connect to a charger to charge the electronic device 100, or may be configured to transmit data between the electronic device 100 and a peripheral device, or may be configured to connect to a headset for playing audio through the headset. The interface may be further configured to connect to another electronic device such as an AR device.

It may be understood that an interface connection relationship between the modules that is shown in this embodiment of the present invention is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input of the battery 142 and/or the charging management module 140, and supplies power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing like filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-transmitted low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 170A, the receiver 170B, and the like), and displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-transmitted signal from the processor 110, perform frequency modulation and amplification on the signal, and convert the signal into an electromagnetic wave for radiation through the antenna 2. The wireless communication module 160 may include a Wi-Fi module.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device 100 may implement a display function through the GPU, the display 194, the application processor, and the like. The display 194 is configured to display an image, a video, and the like. The display 194 includes a display panel. The electronic device 100 may implement a photographing function through the ISP, the camera 193, the video codec, the GPU, the display 194, the application processor, and the like. The ISP is configured to process data fed back by the camera 193. For example, during photographing, a shutter is pressed, light is transmitted to a camera photosensitive element through a lens, an optical signal is converted into an electrical signal, and the camera photosensitive element transmits the electrical signal to an ISP for processing, to convert the electrical signal into an image visible to naked eyes. The camera 193 is configured to capture a static image or a video. An optical image of an object is generated through the lens, and is projected onto the photosensitive element. The digital signal processor is configured to process a digital signal, and may process another digital signal in addition to the digital image signal. The video codec is configured to compress or decompress a digital video. The electronic device 100 may support one or more video codecs. The NPU is a neural-network (neural-network, NN) computing processor. The NPU quickly processes input information by referring to a structure of a biological neural network, for example, a transfer mode between human brain neurons, and may further continuously perform self-learning. The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement audio functions such as music playing and recording, through the audio module 170, the speaker 170A, the receiver 170B, the microphone 170C, the headset jack 170D, the application processor, and the like.

The pressure sensor 180A is configured to sense a pressure signal, and can convert the pressure signal into an electrical signal. The gyroscope sensor 180B may be configured to determine a moving posture of the electronic device 100. The acceleration sensor 180E may detect accelerations of the electronic device 100 in various directions (usually on three axes). The fingerprint sensor 180H is configured to collect a fingerprint. The temperature sensor 180J is configured to detect a temperature. In some embodiments, the electronic device 100 executes a temperature processing policy through the temperature detected by the temperature sensor 180J. The touch sensor 180K is also referred to as a "touch panel". The touch sensor 180K may be disposed in the display 194, and the touch sensor 180K and the display 194 form a touchscreen, which is also referred to as a "touchscreen". The indicator 192 may be an indicator light, and may be configured to indicate a charging status and a power change, or may be configured to indicate a message, a missed call, a notification, and the like.

For a hardware structure of the electronic device 300 in this embodiment of this application, refer to the hardware structure of the electronic device 100. Hardware modules included in the electronic device 300 and the electronic device 100 may be the same or may be different. This is not limited in this embodiment of this application.

The following describes a hardware structure of a routing device 200 provided in an embodiment of this application.

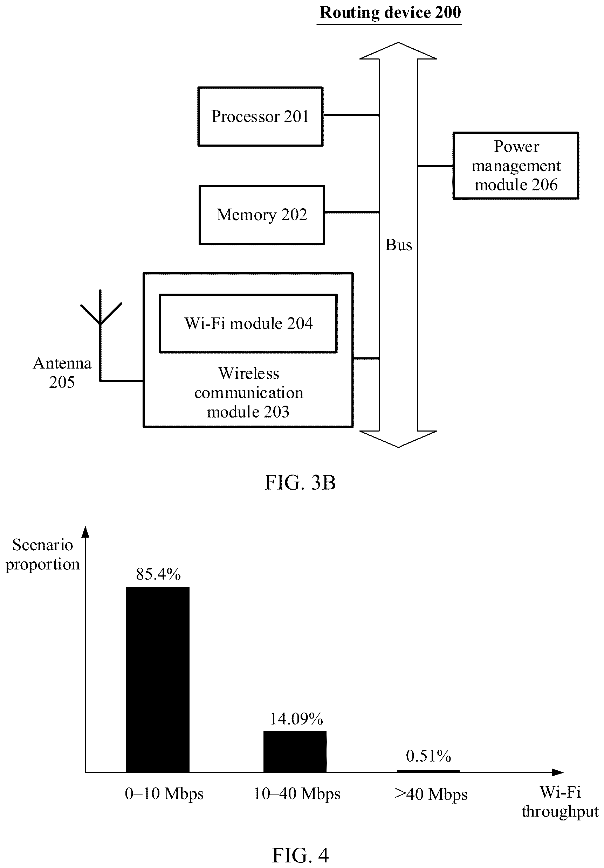

FIG. 3B is a diagram of a hardware structure of a routing device 200 according to an embodiment of this application.

As shown in FIG. 3B, the routing device 200 may include a processor 201, a memory 202, a wireless communication module 203, an antenna 205, and a power management module 206. Specifically,
the processor 201 may include one or more processing units. For example, the processor 201 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the routing device 200. The controller may generate an operation control signal based on instruction operation code and a time sequence signal, to complete control of instruction fetching and instruction execution.

The memory may be further disposed in the processor 201, and is configured to store instructions and data. In some embodiments, the memory in the processor 201 is a cache memory. The memory may store instructions or data that has been used or is cyclically used by the processor 201. If the processor 201 needs to use the instructions or the data again, the processor 201 may directly invoke the instructions or the data from the memory. This avoids repeated access, reduces waiting time of the processor 201, and improves system efficiency.

In some embodiments, the processor 201 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules that is shown in this embodiment of the present invention is merely an example for description, and does not constitute a limitation on a structure of the routing device 200. In some other embodiments of this application, the routing device 200 may alternatively use an interface connection manner different from that in the foregoing embodiment, or a combination of a plurality of interface connection manners.

In some embodiments, the processor 201 may be configured to parse a signal received by the wireless communication module 203, and demodulate the signal. The processor 201 may respond based on a parsing result, and perform a corresponding operation, for example, perform a sensing operation. In some embodiments, the processor 201 may be further configured to generate a signal sent outward by the wireless communication module 203, for example, a Wi-Fi signal.

The memory 202 is coupled to the processor 201, and is configured to store various software programs and/or a plurality of groups of instructions. During specific implementation, the memory 202 may include a high-speed random access memory, and may also include a nonvolatile memory like one or more disk storage devices, a flash device, or another nonvolatile solid-state storage device. The memory 202 may store an operating system, for example, an embedded operating system such as uCOS, VxWorks, or RTLinux. The memory 202 may further store a communication program, and the communication program may be used to communicate with the routing device 200 or another device.

The wireless communication module 203 may include a Wi-Fi module 204. The Wi-Fi module 204 may provide a Wi-Fi wireless communication solution applied to the routing device 200. A Wi-Fi protocol used in the Wi-Fi module 204 may be IEEE802.11a, 802.11b, 802.11n, 802.11ac, 802.11ax, or the like.

Possibly, the wireless communication module 203 may further include another communication module to provide another solution of wireless communication (for example, Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology).

Possibly, the Wi-Fi module 204 may be integrated with another communication module (for example, a Bluetooth communication module). The Wi-Fi module 204 may listen to a signal transmitted by another device, for example, a measurement signal or a scanning signal, and may send a response signal, for example, measurement response or scanning response, so that the another device can discover the routing device 200. The routing device 200 may establish a wireless communication connection to the another device through one or more of WLAN, Bluetooth, or another near-field communication technology, to perform data transmission.

In some other embodiments, the Wi-Fi module 204 may also transmit a signal, for example, broadcast a sounding signal or a beacon signal, so that another device may discover the routing device 200. The routing device 200 may establish a wireless communication connection to the another device by using a WLAN or another short-distance wireless communication technology, to perform data transmission.

The antenna 205 may be configured to transmit and receive electromagnetic wave signals. Antennas of different communication modules may be reused, or may be independent of each other, to improve antenna utilization.

The power management module 206 may be configured to control a power supply to supply power to the routing device 200. The power supply may be a battery or an external power supply.

In some embodiments, the hardware structure of the routing device 200 may further include an audio module (not shown in FIG. 3B) and a speaker (not shown in FIG. 3B). The audio module is configured to convert digital audio information into an analog audio signal for output, and is also configured to convert an analog audio input into a digital audio signal. The audio module may be configured to encode and decode an audio signal. The speaker, also referred to as a "loudspeaker", is configured to convert an audio electrical signal into a sound signal.

In some embodiments, the hardware structure of the routing device 200 may further include a microphone (not shown in FIG. 3B). The microphone, also referred to as a "mike" or a "mic", is configured to convert a sound signal into an electrical signal. When making a call or sending a voice message, a user may make a sound near the microphone through the mouth of the user, to input a sound signal to the microphone. At least one microphone may be disposed in the routing device 200.

In some embodiments, the hardware structure of the routing device 200 may further include a display (not shown in FIG. 3B). The display is configured to display an image, a video, and the like. The display includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diodes, QLED), or the like. In some embodiments, the routing device 200 may include 1 or N displays, where N is a positive integer greater than 1.

In some embodiments, the hardware structure of the routing device 200 may further include one or more sensors (not shown in FIG. 3B). The one or more sensors may include one or more of a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It should be noted that the routing device 200 shown in FIG. 3B is merely an embodiment of this application. In actual application, the routing device 200 may include more or fewer components. This is not limited herein.

FIG. 4 is a diagram of a Wi-Fi application scenario according to an embodiment of this application.

As shown in FIG. 4, based on big data statistics, in Wi-Fi application scenarios, a scenario in which a Wi-Fi throughput is lower than 10 Mbps accounts for 85.4%, a scenario in which a Wi-Fi throughput is between 10 Mbps and 40 Mbps accounts for 14.09%, and a scenario in which a Wi-Fi throughput is greater than 40 Mbps accounts for 0.51%. Therefore, a scenario in which a Wi-Fi throughput is lower than 40 Mbps accounts for more than 99%.

From a perspective of design of a Wi-Fi protocol, the Wi-Fi protocol aims at high throughput performance, and low power consumption design in a medium- and low-throughput scenario (for example, a scenario in which a throughput is less than 40 Mbps) is insufficient. Specifically, it is reflected in the following two aspects: 1. The design of the Wi-Fi protocol pursues transmission of a channel bandwidth as large as possible in terms of a frequency bandwidth. For example, a maximum channel bandwidth supported in the Wi-Fi 6 protocol is 160 MHz. 2. The Wi-Fi protocol is designed to use a plurality of antennas for data transmission in terms of a quantity of antennas. For example, a device that supports the Wi-Fi 6 protocol has two antennas in standard configuration. In general, the Wi-Fi protocol pursues a high transmission rate in a service process. If a plurality of antennas can be used for transmission, a single antenna is not selected for transmission. If a large channel bandwidth can be used for transmission, a small channel bandwidth is not selected for transmission.

However, because the device selects to operate on a large channel bandwidth, a higher analog-to-digital converter (analog to digital converter, ADC) sampling rate, a higher fast Fourier transform size (fast Fourier transform size, FFT size), and a higher frequency baseband working clock are required. As a result, power consumption of the device is increased linearly. When the device operates with a plurality of antennas, adding one transmit antenna or receive antenna necessitates a corresponding transmit channel or receive channel, thereby causing an exponential increase in power consumption.

It can be learned that, if the device uses a maximum channel bandwidth and a largest quantity of antennas, for a Wi-Fi service scenario, this manner is not an optimal energy efficiency manner, and operating mode switching needs to be performed based on different operating scenarios.

The following describes a frame interaction process in which a quantity of antennas is switched by using an action frame provided in the Wi-Fi protocol in embodiments of this application.

In some Wi-Fi protocols (for example, an 802.11n version and an 802.11 protocol cluster after the 802.11n version), a spatial multiplexing energy saving (spatial multiplexing power save, SMPS) frame belonging to an action frame (action frame) is defined at a media access control (media access control, MAC) layer, and the SMPS frame may be used for frame interaction for switching an antenna mode. The SMPS frame may indicate, by using enable (enable) and disable (disable), triggering to enter and exit a single-antenna mode. As defined in the Wi-Fi protocol, the SMPS frame may be exchanged in a static mode or a dynamic mode to switch the antenna mode.

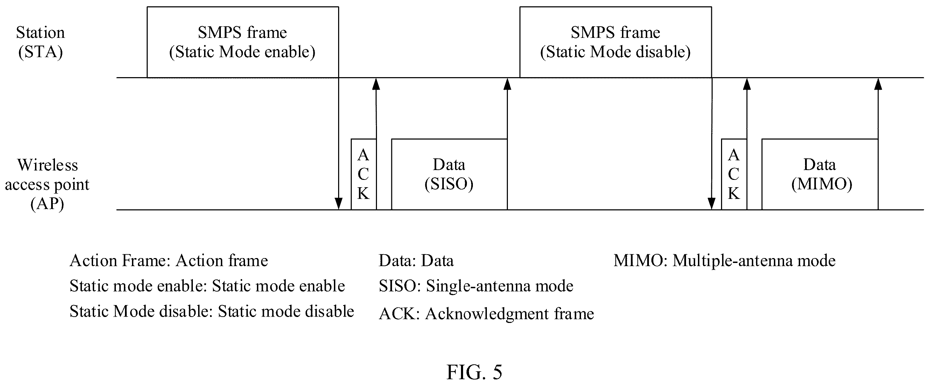

FIG. 5 shows a frame interaction process of switching an antenna mode in a static mode by using an SMPS frame according to an embodiment of this application.

As shown in FIG. 5, a station device (STA) is in a multi-antenna mode (MIMO) by default. When the STA intends to switch to a single-antenna mode (SISO), the STA may first send an SMPS frame to a wireless access point (AP) in the multi-antenna mode, and indicate static mode enable (Static Mode enable) in the SMPS frame. After receiving, in the multi-antenna mode, the SMPS frame that indicates static mode enable, the AP may return, in the multi-antenna mode, an acknowledgment frame (acknowledge, ACK) to the STA, to indicate that the AP has received the SMPS frame that indicates static mode enable. After receiving, in the multi-antenna mode, the SMPS frame that indicates static mode enable, and returning the ACK to the STA, the AP may switch to the single-antenna mode (SISO) to send data (including a data frame, a management frame, a control frame, and the like at a MAC layer) to the STA. If the STA intends to switch back to the multi-antenna mode (MIMO) to exchange data with the AP, the STA may send, to the AP in the single-antenna mode, an SMPS frame that indicates static mode disable (Static Mode disable). After receiving, in the single-antenna mode, the SMPS frame that indicates static mode disable (Static Mode disable), the AP may return an ACK to the STA, to indicate that the AP has received the SMPS frame that indicates static mode disable. After receiving, in the single-antenna mode, the SMPS frame that indicates static mode disable, and returning the ACK to the STA, the AP may send data (including a data frame, a management frame, a control frame, and the like at a MAC layer) to the STA in the multi-antenna mode (MIMO).

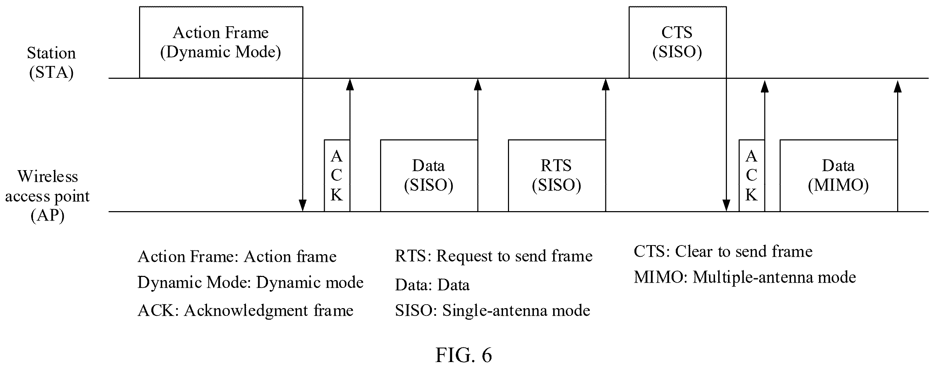

FIG. 6 shows a frame interaction process of switching an antenna mode in a dynamic mode by using an SMPS frame according to an embodiment of this application.

As shown in FIG. 6, a STA is in a multi-antenna mode by default. The STA may send an SMPS frame to an AP in the multi-antenna mode, and indicate a dynamic mode (Dynamic Mode) in the SMPS frame. After receiving, in the multi-antenna mode, the SMPS frame that indicates the dynamic mode, the AP may return, in the multi-antenna mode, an ACK to the STA, to indicate that the AP has received the SMPS frame that indicates the dynamic mode. After receiving, in the multi-antenna mode, the SMPS frame that indicates the dynamic mode, and returning the ACK to the STA in the multi-antenna mode, the AP may switch to a single-antenna mode (SISO) to send data (including a data frame, a management frame, a control frame, and the like at a MAC layer) to the STA. If the AP intends to send the data frame to the STA in the multi-antenna mode, the AP may send a request to send (request to send, RTS) frame to the STA in the single-antenna mode, where the RTS is used to request to send the data frame to the STA in the multi-antenna mode. After receiving the RTS in the single-antenna mode, the STA may send a clear to send (clear to send) frame to the AP in the single-antenna mode. After receiving the CTS in the single-antenna mode, the AP may switch back to the multi-antenna mode (MIMO) to send data (including a data frame, a management frame, a control frame, and the like at a MAC layer) to the STA.

It can be learned from the foregoing frame interaction processes of switching the antenna mode by using the SMPS frame shown in FIG. 5 and FIG. 6 that, the SMPS frame can be used only for handshake of antenna mode switching. In addition, in the process of switching the antenna mode by using the SMPS frame, after receiving the ACK returned by the AP, the STA simply considers that the AP sends a data frame to the STA in the antenna mode indicated by the STA by using the SMPS frame. However, the ACK returned by the AP after receiving the SMPS frame merely indicates that the SMPS frame has been successfully decoded, and does not indicate that the AP definitely sends, after receiving the SMPS frame that indicates to switch to the single-antenna mode and returning the ACK, data in the single-antenna mode indicated by the SMPS frame. After receiving the SMPS frame that indicates to switch to the single-antenna mode and returning the ACK, the AP still cannot switch to the single-antenna mode to receive and send data because a channel condition does not meet a requirement, or the AP does not support the single-antenna mode. Therefore, in a subsequent data sending and receiving process, a compatibility problem exists. In other words, the AP may still continue to send data in the original multi-antenna mode, but the STA has switched to the single-antenna mode for receiving, which causes a data receiving failure of the STA.

The following describes a frame interaction process of switching an antenna mode and a channel bandwidth by using an operating mode indicator frame provided in the Wi-Fi protocol in embodiments of this application.

In some Wi-Fi protocols (for example, an 802.11ax version and an 802.11 protocol cluster after the 802.11ax version), it is defined at a MAC layer that an operating mode control field (operating mode control field, OM control field) may be carried in a MAC layer frame such as a management frame (for example, an action (Action) frame) as an operating mode indicator (operating mode indicator, OMI) frame. The OM control field in the OMI frame may include a channel bandwidth field and an antenna mode field. The channel bandwidth field may indicate a target channel bandwidth obtained after mode switching, and the antenna mode field may indicate a target antenna mode obtained after mode switching.

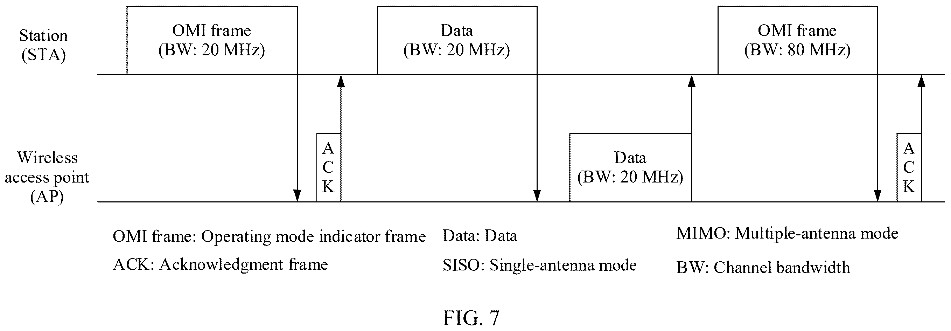

FIG. 7 shows a frame interaction process of switching a channel bandwidth by using an OMI frame according to an embodiment of this application.

As shown in FIG. 7, a STA may send an OMI frame to an AP, and indicate a target channel bandwidth 1 (for example, 20 MHz) in the OMI frame. After receiving the OMI frame that indicates the target channel bandwidth 1, the AP may return an ACK to the STA, to indicate that the AP has received the OMI frame that indicates the target channel bandwidth 1. After receiving the ACK, the STA may send data (including a data frame, a management frame, a control frame, and the like at a MAC layer) to the AP by using the target channel bandwidth 1 (for example, 20 MHz), and receive, by using the target channel bandwidth 1, data sent by the AP. After receiving the OMI frame that indicates the target channel bandwidth 1 and returning the ACK to the STA, the AP may send data to the STA by using the target channel bandwidth 1, and receive, by using the target channel bandwidth 1, data sent by the STA.

If the STA intends to switch the channel bandwidth, the STA may send, to the AP by using the target channel bandwidth 1, an OMI frame that indicates a target channel bandwidth 2 (for example, 80 MHz). After receiving, by using the target channel bandwidth 1, the OMI frame that indicates the target channel bandwidth 2, the AP may return an ACK to the STA by using the target channel bandwidth 1, to indicate that the AP has received the OMI frame that indicates the target channel bandwidth 2. After receiving the ACK by using the target channel bandwidth 1, the STA may send data to the AP by using the target channel bandwidth 2 (for example, 80 MHz), and receive, by using the target channel bandwidth 2, data sent by the AP. After receiving the OMI frame that indicates the target channel bandwidth 2 and returning the ACK to the STA, the AP may send data to the STA by using the target channel bandwidth 2, and receive, by using the target channel bandwidth 2, data sent by the STA.

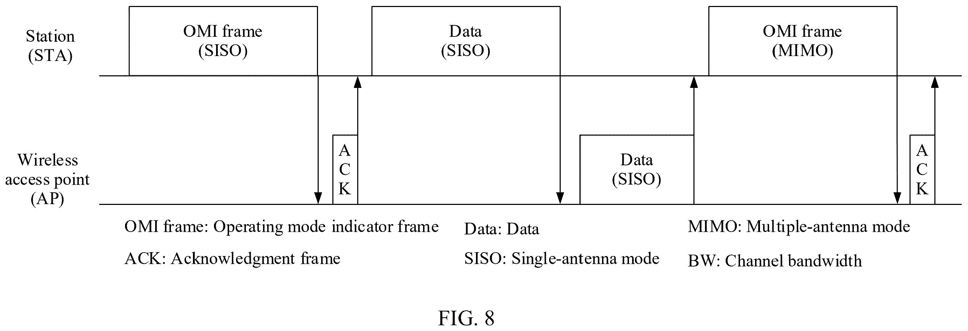

FIG. 8 shows a frame interaction process of switching an antenna mode by using an OMI frame according to an embodiment of this application.

As shown in FIG. 8, a STA may send an OMI frame to an AP, and indicate a target antenna mode 1 (for example, SISO) in the OMI frame. After receiving the OMI frame that indicates the target antenna mode 1, the AP may return an ACK to the STA, to indicate that the AP has received the OMI frame that indicates the target antenna mode 1. After receiving the ACK, the STA may send, in the target antenna mode 1 (for example, SISO), data (including a data frame, a management frame, a control frame, and the like at a MAC layer) to the AP, and receive, in the target antenna mode 1, data sent by the AP. After receiving the OMI frame that indicates the target antenna mode 1 and returning the ACK to the STA, the AP may send data to the STA in the target antenna mode 1, and receive, in the target antenna mode 1, data sent by the STA.

If the STA intends to switch the antenna mode, the STA may resend, to the AP, an OMI frame that indicates the target antenna mode 2 (for example, MIMO). After receiving the OMI frame that indicates the target antenna mode 2, the AP may return an ACK to the STA, to indicate that the AP has received the OMI frame that indicates the target antenna mode 2. After receiving the ACK, the STA may send data to the AP in the target antenna mode 2, and receive, in the target antenna mode 2, data sent by the AP. After receiving the OMI frame that indicates the target antenna mode 2 and returning the ACK to the STA, the AP may send data to the STA in the target antenna mode 2, and receive, in the target antenna mode 2, data sent by the STA.

It can be learned from the frame interaction processes of switching the antenna mode and the channel bandwidth by using the OMI frame shown in FIG. 7 and FIG. 8 that, in the process of switching the antenna mode and/or the channel bandwidth by using the OMI frame, after receiving the ACK returned by the AP, the STA simply considers that the AP sends data to the STA based on the antenna mode and/or the channel bandwidth that are/is indicated by the STA by using the OMI frame. However, the ACK returned by the AP after receiving the OMI frame merely indicates that the OMI frame has been successfully decoded, and does not indicate that the AP definitely sends the data frame based on the antenna mode and/or the channel bandwidth indicated by the OMI frame. Therefore, in a subsequent data frame sending and receiving process, a compatibility problem exists. In other words, the AP may still continue to perform sending based on the original multi-antenna mode and/or a high channel bandwidth, but the STA has switched to the single-antenna mode and/or a low channel bandwidth for receiving, which causes a data receiving failure of the STA.

It can be learned from the foregoing plurality of action frames (Action Frame) defined for mode switching in Wi-Fi that, when devices negotiate mode switching, no explicit handshake mechanism is defined, and a device simply considers that a peer end completes operating mode switching after receiving an ACK returned by the peer end. This brings a high compatibility risk.

Therefore, an embodiment of this application provides a Wi-Fi operating mode switching method, so that when an electronic device 100 establishes a Wi-Fi connection to a peer device, if the electronic device 100 needs to switch from a first operating mode to a second operating mode, where a specification of the first operating mode is higher than a specification of the second operating mode, the electronic device 100 may send an operating mode switching indication to the peer device, to indicate the peer device to switch to the second operating mode. After sending the operating mode switching indication to the peer device, the electronic device 100 may switch to the second operating mode to send a physical frame to the peer device, and keep receiving, in the first operating mode, a physical frame sent by the peer device. When detecting, in the physical frame sent by the peer device, that the peer device has switched to the second operating mode, the electronic device switches an operating mode of the Wi-Fi module to the second operating mode.

In a Wi-Fi device (for example, the electronic device 100), a high-specification operating mode may be compatible with a low-specification operating mode. In other words, when a Wi-Fi module in the Wi-Fi device operates in the high-specification operating mode, the Wi-Fi device can support sending and receiving of a physical frame in the high-specification operating mode, and can also support sending and receiving of a physical frame in the low-specification operating mode. However, when the Wi-Fi module in the Wi-Fi device operates in the low-specification operating mode, the Wi-Fi device can only support sending and receiving of a physical frame in the low-specification operating mode. Therefore, when operating mode switching is performed between the electronic device 100 and the peer device, the electronic device 100 can switch to send a physical frame to the peer device in the low-specification operating mode, and the electronic device 100 keeps receiving, in the high-specification operating mode, a physical frame sent by the peer device, so that it can be ensured that the electronic device 100 switches the operating mode of the Wi-Fi module to the low-specification operating mode after clearly learning that the peer device successfully switches to the low-specification operating mode. This can ensure normal data transmission between the electronic device 100 and the peer device when the operating mode of the Wi-Fi module is switched.

The following describes a Wi-Fi operating mode switching method provided in an embodiment of this application.

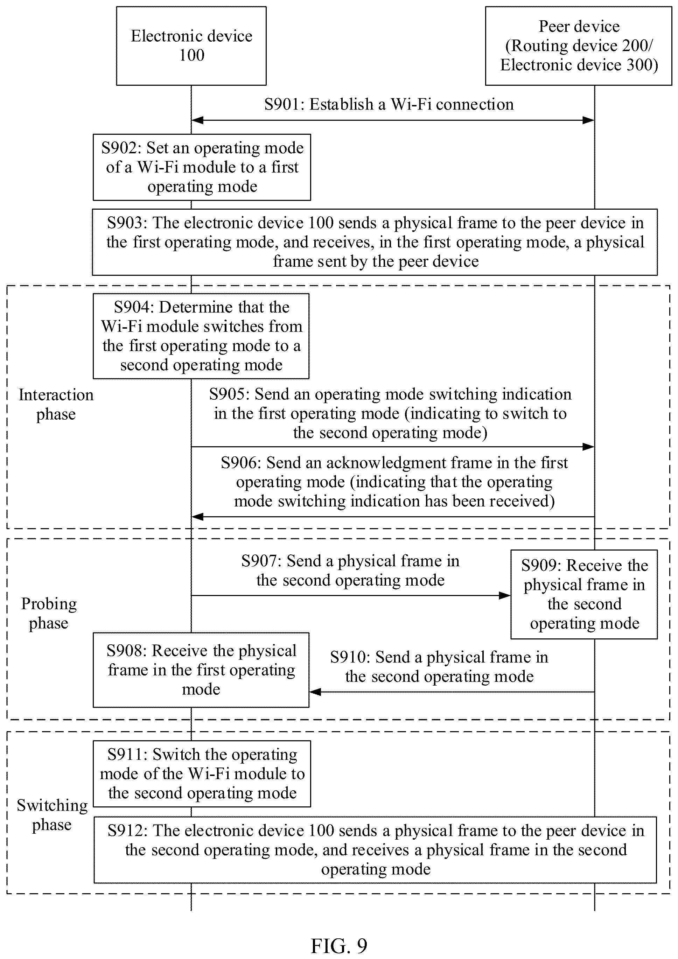

FIG. 9 is a schematic flowchart of a Wi-Fi operating mode switching method according to an embodiment of this application.

As shown in FIG. 9, the method may include the following steps:
S901: An electronic device 100 establishes a Wi-Fi connection to a peer device.

The peer device may be the routing device 200 in the communication system shown in FIG. 1 or FIG. 2, or may be the electronic device 300 in the communication system shown in FIG. 2.

S902: The electronic device 100 sets an operating mode of a Wi-Fi module to a first operating mode.

When the electronic device 100 establishes a Wi-Fi link with the peer device, the electronic device 100 negotiates with the peer device to operate in the first operating mode. Therefore, the electronic device 100 may set the operating mode of the Wi-Fi module to the first operating mode.

S903: The electronic device 100 sends a physical frame to the peer device in the first operating mode, and receives, in the first operating mode, a physical frame sent by the peer device.

When the operating mode of the Wi-Fi module is set to the first operating mode, the electronic device 100 may send the physical frame to the peer device in the first operating mode, and receive, in the first operating mode, the physical frame sent by the peer device.

The first operating mode includes one or more of a first quantity of antennas, a first channel bandwidth, and a first modulation and coding scheme (modulation and coding scheme, MCS).

After step S903, three phases may be included: an interaction phase, a probing phase, and a switching phase. The interaction phase may include step S904 to step S906. The probing phase may include step S907 to step S910. The switching phase may include step S911 and step S912.

S904: The electronic device 100 determines that the Wi-Fi module switches from the first operating mode to a second operating mode.

The second operating mode includes one or more of a second quantity of antennas, a second channel bandwidth, and a second MCS.

A specification of the first operating mode is higher than a specification of the second operating mode. In other words, the first quantity of antennas (for example, two antennas) is greater than the second quantity of antennas (for example, one antenna); and/or the first channel bandwidth (for example, 80 MHz) is greater than the second channel bandwidth (for example, 20 MHz); and/or an order of the first MCS (for example, an MCS 10) is greater than an order of the second MCS (for example, an MCS 6).

The electronic device 100 may determine, when determining that the electronic device 100 needs to enter a low power consumption state, to switch from the first operating mode to the second operating mode.

For example, a determining condition for entering the low energy consumption state may include: a remaining power level of the electronic device 100 is less than a specified power level, and/or a device temperature of the electronic device 100 is higher than a specified temperature threshold, and the like.

An MCS table may be shown in the following Table 1:

**Table 1**

| MCS order | Modulation scheme | Code rate |
|---|---|---|
| 0 | BPSK | 1/2 |
| 1 | QPSK | 1/2 |
| 2 | QPSK | 3/4 |
| 3 | 16-QAM | 1/2 |
| 4 | 16-QAM | 3/4 |
| 5 | 64-QAM | 2/3 |
| 6 | 64-QAM | 3/4 |
| 7 | 64-QAM | 5/6 |
| 8 | 256-QAM | 3/4 |
| 9 | 256-QAM | 5/6 |
| 10 | 1024-QAM | 3/4 |
| 11 | 1024-QAM | 5/6 |

A modulation scheme corresponding to an MCS 0 is binary phase shift keying (binary phase shift keying, BPSK), and a code rate is 1/2. A modulation scheme corresponding to an MCS 1 is quadrature phase shift keying (quadrature phase shift keying, QPSK), and a code rate is 1/2. A modulation scheme corresponding to an MCS 2 is QPSK, and a code rate is 1/2. A modulation scheme corresponding to an MCS 3 is 16 quadrature amplitude modulation (quadrature amplitude modulation, QAM) (16-QAM), and a code rate is 1/2. A modulation scheme corresponding to an MCS 4 is 16-QAM, and a code rate is 3/4. A modulation scheme corresponding to an MCS 5 is 64 quadrature amplitude modulation (64-QAM), and a code rate is 2/3. A modulation scheme corresponding to an MCS 6 is 64-QAM, and a code rate is 3/4. A modulation scheme corresponding to an MCS 7 is 64-QAM, and a code rate is 5/6. A modulation scheme corresponding to an MCS 8 is 256 quadrature amplitude modulation (256-QAM), and a code rate is 2/3. A modulation scheme corresponding to an MCS 9 is 256-QAM, and a code rate is 5/6. A modulation scheme corresponding to an MCS 10 is 1024 quadrature amplitude modulation (1024-QAM), and a code rate is 3/4. A modulation scheme corresponding to an MCS 11 is 1024-QAM, and a code rate is 5/6.

The foregoing Table 1 merely shows examples of MCSs in some Wi-Fi protocols. In some other Wi-Fi protocols, there may be higher-order MCSs. This is not limited in embodiments of this application.

S905: The electronic device 100 sends an operating mode switching indication to the peer device in the first operating mode, where the operating mode switching indication indicates to switch to the second operating mode.

When the quantity of antennas in the first operating mode is different from that in the second operating mode (for example, the quantity of antennas in the first operating mode is two, and the quantity of antennas in the second operating mode is one), the operating mode switching indication may be an SMPS frame or an OMI frame in the Action frame.

When the channel bandwidth in the first operating mode is different from that in the second operating mode (for example, the channel bandwidth in the first operating mode is 80 MHz, and the channel bandwidth in the second operating mode is 20 MHz), the operating mode switching indication may be an OMI frame in the Action frame.

In a possible implementation, when the antenna mode and/or the channel bandwidth and/or the MCS order in the first operating mode are/is different from that in the second operating mode (for example, the first MCS is the MCS 10, and the second MCS is the MCS 6), the operating mode switching indication may be a user-defined Action frame.

For specific text description of the SMPS frame, refer to the embodiments shown in FIG. 5 and FIG. 6. For text description of the OMI frame, refer to the embodiments shown in FIG. 7 and FIG. 8. Details are not described herein again.

S906: After receiving the operating mode switching indication in the first operating mode, the peer device sends an acknowledgment frame to the electronic device 100 in the first operating mode, where the acknowledgment frame indicates that the operating mode switching indication has been received.

S907: After receiving the acknowledgment frame in the first operating mode, the electronic device 100 sends a physical frame to the peer device in the second operating mode.

S908: After receiving the acknowledgment frame in the first operating mode, the electronic device 100 receives a physical frame in the first operating mode.

A high-specification operating mode may be compatible with a low-specification operating mode. In other words, when the Wi-Fi module in the electronic device 100 operates in the high-specification operating mode, the electronic device 100 can support sending and receiving of a physical frame in the high-specification operating mode, and can also support sending and receiving of a physical frame in the low-specification operating mode. However, when the Wi-Fi module in the electronic device 100 operates in the low-specification operating mode, the electronic device 100 can only support sending and receiving of a physical frame in the low-specification operating mode.

Because the specification of the first operating mode is higher than the specification of the second operating mode, the first operating mode may be compatible with the second operating mode. Therefore, when receiving the physical frame in the first operating mode, the electronic device 100 may successfully receive the physical frame sent by the peer device in the second operating mode or the first operating mode. However, if the electronic device 100 receives the physical frame in the second operating mode, the electronic device 100 can successfully receive the physical frame sent by the peer device in the second operating mode, but cannot successfully receive the physical frame sent by the peer device in the first operating mode. Therefore, after receiving the acknowledgment frame, the electronic device 100 may first send the physical frame to the peer device in the second operating mode, but still keep receiving the physical frame in the first operating mode. After the electronic device 100 receives, in the first operating mode, the physical frame sent by the peer device, the electronic device 100 may identify, in the physical frame sent by the peer device, the operating mode used when the peer device sends the physical frame, and then choose to switch the operating mode for sending and receiving the physical frame to the first operating mode or the second operating mode.

In this way, after the electronic device 100 indicates the peer device to switch to a target operating mode, a case in which the electronic device 100 cannot successfully receive data sent by the peer device when the peer device does not really switch to the target operating mode can be avoided.

For example, after receiving the acknowledgment frame, the electronic device 100 may send the physical frame to the peer device by using a single antenna, and receive the physical frame by using a plurality of antennas (for example, two antennas). When the peer device switches to sending the physical frame to the electronic device 100 by using a single antenna, the electronic device 100 can successfully receive the physical frame sent by the peer device. When the peer device still sends the physical frame to the electronic device 100 by using a plurality of antennas, the electronic device 100 can also successfully receive the physical frame sent by the peer device.

For another example, after receiving the acknowledgment frame, the electronic device 100 may send the physical frame to the peer device by using the 20 MHz channel bandwidth, and receive the physical frame by using the 80 MHz channel bandwidth. When the peer device switches to sending the physical frame to the electronic device 100 by using the 20 MHz channel bandwidth, the electronic device 100 can successfully receive the physical frame sent by the peer device by using the 20 MHz channel bandwidth. When the peer device still sends the physical frame to the electronic device 100 by using the 80 MHz channel bandwidth, the electronic device 100 can also successfully receive the physical frame sent by the peer device.

S909: After sending the acknowledgment frame, the peer device receives the physical frame in the second operating mode.

S910: After sending the acknowledgment frame, the peer device sends a physical frame to the electronic device 100 in the second operating mode.

S911: If the electronic device 100 detects, in the physical frame sent by the peer device, that the peer device has switched to the second operating mode, the electronic device 100 may switch the operating mode of the Wi-Fi module to the second operating mode.

In some Wi-Fi protocols, the physical frame sent by the peer device may carry the operating mode of the peer device when the physical frame is sent. For example, in an 802.11n protocol and an 802.11 protocol cluster after the 802.11n protocol version, a physical frame may include an L-SIG field and an HT-SIG field, and the L-SIG field may carry an antenna mode used when a transmit end sends the physical frame. The HT-SIG field may carry a channel bandwidth and an MCS order that are used when the transmit end sends the physical frame. For another example, in an 802.11ac protocol and an 802.11 protocol cluster after the 802.11n protocol version, a physical frame may include a VHT SIG-B field, and the VHT SIG-B field may carry a channel bandwidth and an MCS order that are used when a transmit end sends the physical frame.

Therefore, when the electronic device 100 detects, in the physical frame sent by the peer device, that the peer device has switched to the second operating mode, the electronic device 100 may switch the operating mode of the Wi-Fi module to the second operating mode.

S912: After switching the operating mode of the Wi-Fi module to the second operating mode, the electronic device 100 sends a physical frame to the peer device in the second operating mode, and receives a physical frame in the second operating mode.

In a possible implementation, if the electronic device 100 detects, in the physical frame sent by the peer device, that the peer device still operates in the first operating mode, it indicates that the peer device cannot switch to the second operating mode, and the operating mode switching fails. Therefore, the electronic device 100 may switch the operating mode used when the physical frame is sent back to the first operating mode, that is, the electronic device 100 may send the physical frame to the peer device in the first operating mode, and receive, in the first operating mode, the physical frame sent by the peer device.

In some embodiments, after the electronic device 100 switches the operating mode of the Wi-Fi module to the second operating mode, if the electronic device 100 detects that the electronic device 100 needs to exit the low power consumption state to switch the operating mode of the Wi-Fi module back to the first operating mode, the electronic device 100 may send, to the peer device, the operating mode switching indication that indicates to switch to the first operating mode. After receiving the acknowledgment frame returned by the peer device, the electronic device 100 may directly switch the operating mode of the Wi-Fi module to the first operating mode.

The specification of the first operating mode is higher than the specification of the second operating mode. The high-specification operating mode is compatible with the low-specification operating mode, and the low-specification operating mode is incompatible with the high-specification operating mode. Because both the electronic device 100 and the peer device support operating in the first operating mode, after receiving the operating mode switching indication that indicates to switch to the first operating mode, the peer device definitely switches back to the first operating mode. Therefore, after receiving the acknowledgment frame returned by the peer device, the electronic device 100 directly switches the operating mode of the Wi-Fi module to the first operating mode. This can also ensure normal data transmission between the electronic device 100 and the peer device when the Wi-Fi module is switched from the low-specification operating mode to the high-specification operating mode.

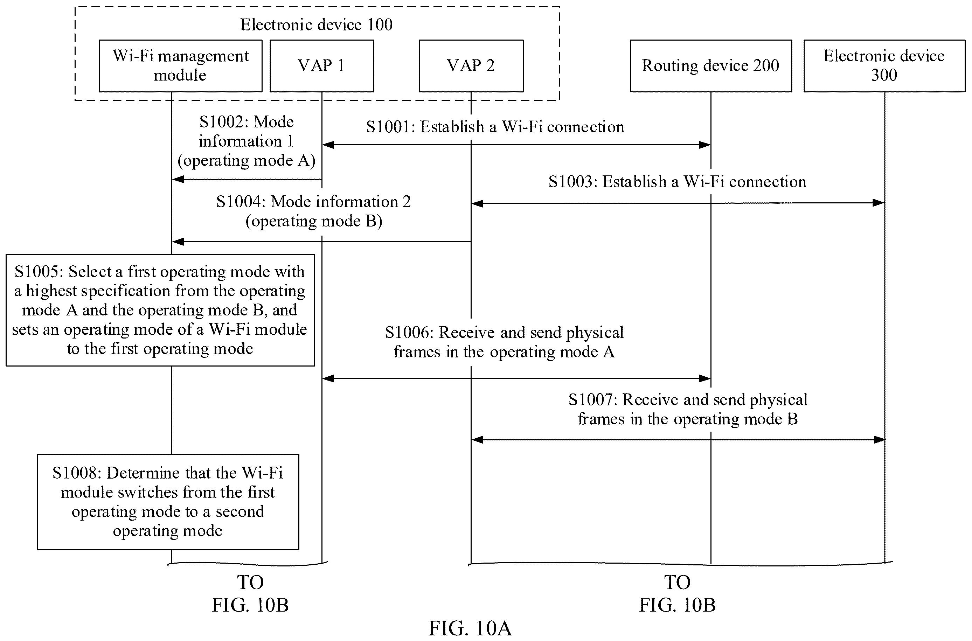

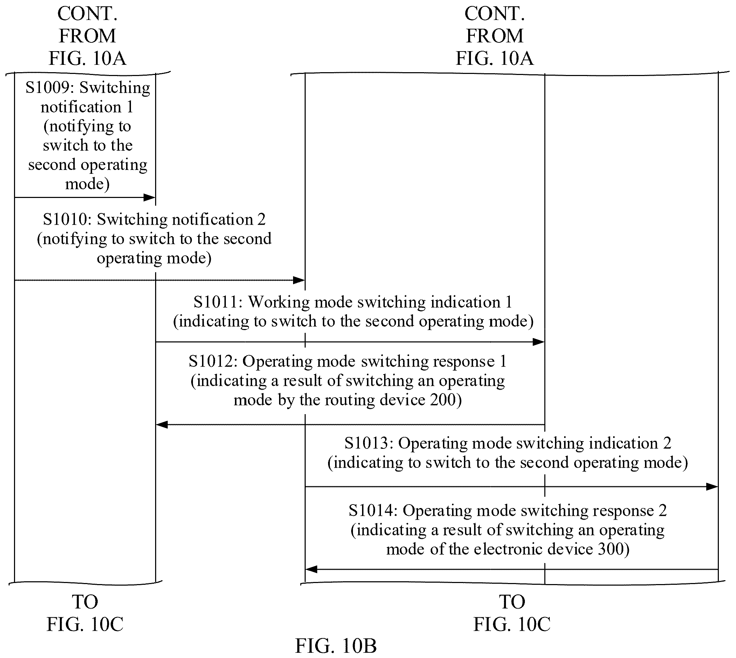

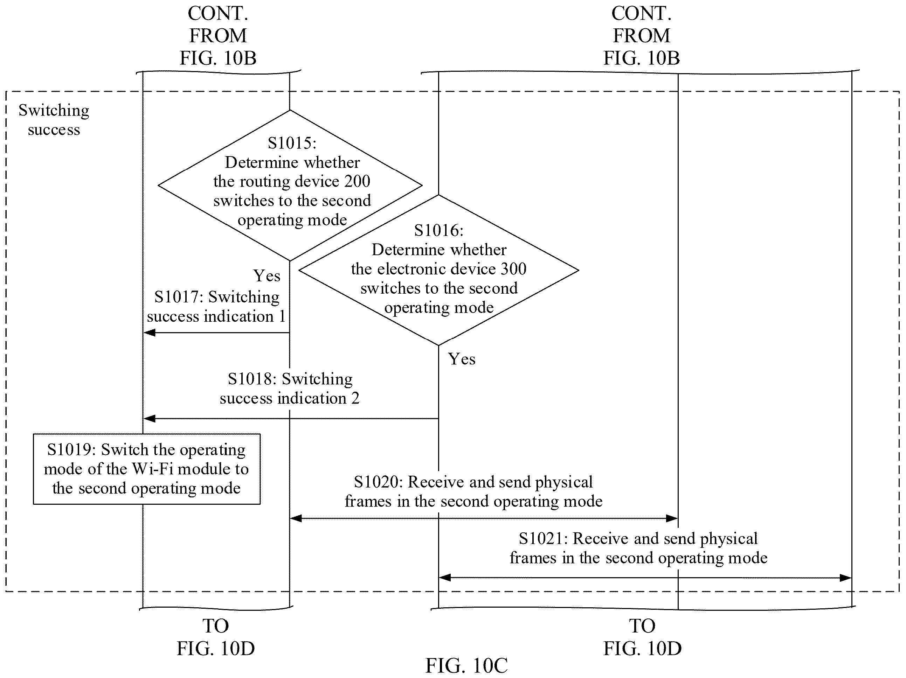

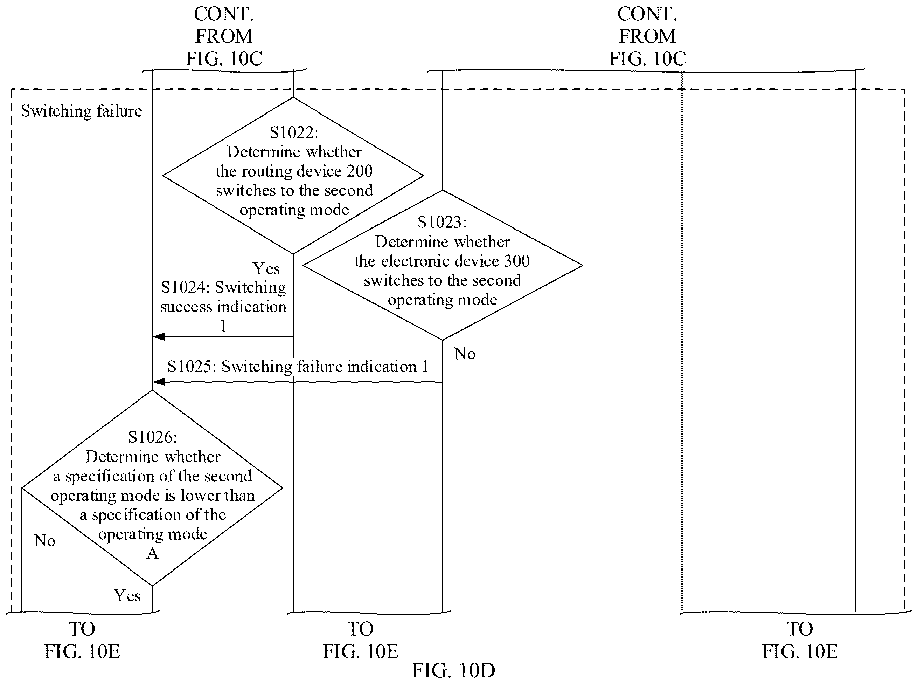

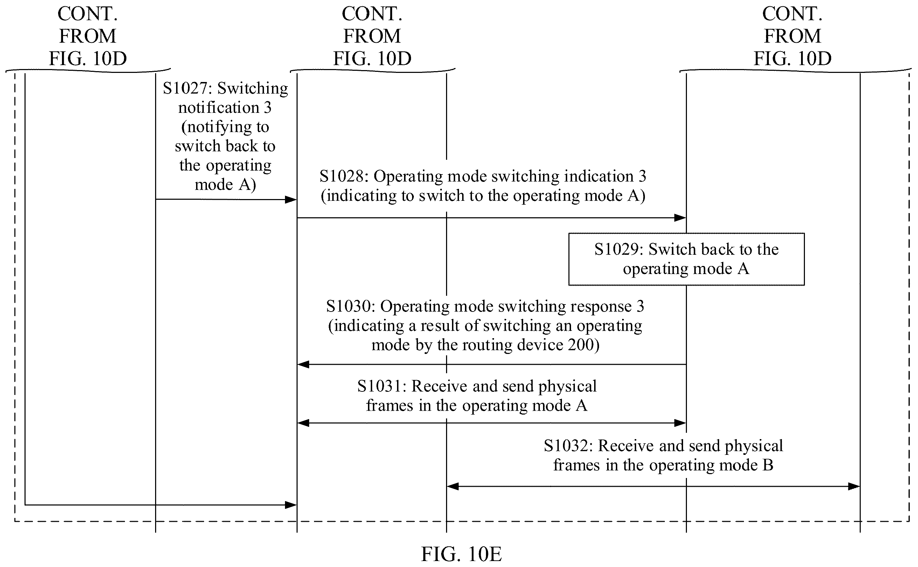

FIG. 10A to FIG. 10E are a schematic flowchart of a Wi-Fi operating mode switching method in a multi-VAP scenario according to an embodiment of this application.

In a multi-VAP scenario, an electronic device 100 may include a VAP 1, a VAP 2, and a Wi-Fi management module. The electronic device 100 may establish a Wi-Fi connection to a routing device 200 through the VAP 1, and establish a Wi-Fi connection to an electronic device 300 through the VAP 2. The VAP 1 and the VAP 2 share a same Wi-Fi module in the electronic device 100. If the Wi-Fi module operates in a first operating mode, the VAP 1 and the VAP 2 can only receive and send physical frames in the first operating mode or in a second operating mode whose specification is lower than that of the first operating mode. If the Wi-Fi module operates in the second operating mode, the VAP 1 and the VAP 2 can only receive and send physical frames in the second operating mode or in an operating mode whose specification is lower than that of the second operating mode.

As shown in FIG. 10A to FIG. 10E, the method may include the following steps.

S1001: The VAP 1 establishes the Wi-Fi connection to the routing device 200.

S1002: The VAP 1 sends mode information 1 to the Wi-Fi management module.

The mode information 1 indicates that operating modes of the VAP 1 and the routing device 200 are an operating mode A.

S1003: The VAP 2 establishes the Wi-Fi connection to the electronic device 300.

S1004: The VAP 2 sends mode information 2 to the Wi-Fi management module.

The mode information 2 indicates that operating modes of the VAP 2 and the electronic device 300 are an operating mode B.

S1005: The Wi-Fi management module selects the first operating mode with a highest specification from the operating mode A and the operating mode B, and sets an operating mode of the Wi-Fi module to the first operating mode.

S1006: Both the VAP 1 and the routing device 200 receive and send physical frames in the operating mode A.

S1007: Both the VAP 2 and the electronic device 300 receive and send physical frames in the operating mode B.

In this case, the Wi-Fi module of the electronic device 100 operates in the first operating mode, and the first operating mode is an operating mode with a highest specification in the operating mode A and the operating mode B. Because a high-specification operating mode is compatible with a low-specification operating mode, both the VAP 1 and the routing device 200 may receive and send physical frames in the operating mode A, and both the VAP 2 and the electronic device 300 may receive and send physical frames in the operating mode B.

S1008: The Wi-Fi management module determines that the Wi-Fi module switches from the first operating mode to the second operating mode.

The electronic device 100 may determine, when determining that the electronic device 100 needs to enter a low power consumption state, to switch from the first operating mode to the second operating mode.

For example, a determining condition for entering the low energy consumption state may include: a remaining power level of the electronic device 100 is less than a specified power level, and/or a device temperature of the electronic device 100 is higher than a specified temperature threshold, and the like.

A specification of the first operating mode is higher than a specification of the second operating mode. In other words, the first quantity of antennas (for example, two antennas) is greater than the second quantity of antennas (for example, one antenna); and/or the first channel bandwidth (for example, 80 MHz) is greater than the second channel bandwidth (for example, 20 MHz); and/or an order of the first MCS (for example, the MCS 10) is greater than an order of the second MCS (for example, the MCS 6).

S1009: The Wi-Fi management module sends a switching notification 1 to the VAP 1.

The switching notification 1 notifies the VAP 1 to switch to the second operating mode.

S1010: The Wi-Fi management module sends a switching notification 2 to the VAP 2.

The switching notification 2 notifies the VAP 2 to switch to the second operating mode.

S1011: After receiving the switching notification 1, the VAP 1 may send an operating mode switching indication 1 to the routing device 200, where the operating mode switching indication 1 indicates to switch to the second operating mode.

The VAP 1 may send the operating mode switching indication 1 to the routing device 200 in the operating mode A.

The first operating mode may include one or more of a first quantity of antennas, a first channel bandwidth, and a first MCS. The second operating mode may include one or more of a second quantity of antennas, a second channel bandwidth, and a second MCS.

When the quantity of antennas in the first operating mode is different from that in the second operating mode (for example, a quantity of antennas in the first operating mode is a plurality of antennas, and a quantity of antennas in the second operating mode is one single antenna), the operating mode switching indication 1 may be an SMPS frame or an OMI frame in the Action frame.

When the channel bandwidth in the first operating mode is different from that in the second operating mode (for example, the channel bandwidth in the first operating mode is 80 MHz, and the channel bandwidth in the second operating mode is 20 MHz), the operating mode switching indication 1 may be an OMI frame in the Action frame.

In a possible implementation, when the quantity of antennas and/or the channel bandwidth and/or the MCS order in the first operating mode are/is different from that in the second operating mode (for example, the first MCS is the MCS 10, and the second MCS is the MCS 6), the operating mode switching indication 1 may be a user-defined Action frame.

For specific text description of the SMPS frame, refer to the embodiments shown in FIG. 5 and FIG. 6. For text description of the OMI frame, refer to the embodiments shown in FIG. 7 and FIG. 8. Details are not described herein again.

S1012: After receiving the operating mode switching indication 1, the routing device 200 sends an operating mode switching response 1 to the VAP 1, where the operating mode switching response 1 indicates a result of switching the operating mode by the routing device 200.

After receiving the operating mode switching indication 1, the routing device 200 may first return an acknowledgment (ACK) frame 1 to the VAP 1 in the operating mode A, where the ACK indicates that the routing device 200 has received the operating mode switching indication 1. After returning the ACK 1 to the VAP 1, the routing device 200 sends the operating mode switching response 1 to the VAP 1.

The operating mode switching response 1 may be a physical frame 1 sent by the routing device 200 to the VAP 1 after the routing device 200 returns the ACK 1 to the VAP 1. The routing device 200 may add, to the physical frame 1, the operating mode that is used when the physical frame 1 is sent. When the routing device 200 can switch to the second operating mode, the routing device 200 may switch to the second operating mode, send the physical frame 1 to the VAP 1 in the second operating mode, and add information about the second operating mode to the physical frame 1. When the routing device 200 cannot switch to the second operating mode, the routing device 200 may send the physical frame 1 to the VAP 1 in the operating mode A, and add information about the operating mode A to the physical frame 1.

For example, in an 802.11n protocol and an 802.11 protocol cluster after the 802.11n protocol version, the physical frame 1 may include an L-SIG field and an HT-SIG field, and the L-SIG field may carry a quantity of antennas used when the routing device 200 sends the physical frame 1. The HT-SIG field may carry a channel bandwidth and an MCS order that are used when the routing device 200 sends the physical frame 1. For another example, in an 802.11ac protocol and an 802.11 protocol cluster after the 802.11ac protocol version, the physical frame 1 may include a VHT SIG-B field, and the VHT SIG-B field may carry a channel bandwidth and an MCS order that are used when the routing device 200 sends the physical frame 1.

S1013: After receiving the switching notification 2, the VAP 2 may send an operating mode switching indication 2 to the electronic device 300, where the operating mode switching indication 2 indicates to switch to the second operating mode.

The VAP 2 may send the operating mode switching indication 2 to the electronic device 300 in the operating mode B.

S1014: After receiving the operating mode switching indication 2, the electronic device 300 may send an operating mode switching response 2 to the VAP 2, where the operating mode switching response 2 indicates a result of switching the operating mode of the electronic device 300.

After receiving the operating mode switching indication 2, the electronic device 300 may first return an ACK 2 to the VAP 2 in the operating mode B, where the ACK 2 indicates that the electronic device 300 has received the operating mode switching indication 2. After returning the ACK 2 to the VAP 2, the electronic device 300 sends the operating mode switching response 2 to the VAP 2.

The operating mode switching response 2 may be a physical frame 2 sent by the electronic device 300 to the VAP 2 after the electronic device 300 returns the ACK 2 to the VAP 2. The electronic device 300 may add, to the physical frame 2, the operating mode that is used when the physical frame 2 is sent. When the electronic device 300 can switch to the second operating mode, the electronic device 300 may switch to the second operating mode, send the physical frame 2 to the VAP 2 in the second operating mode, and add information about the second operating mode to the physical frame 2. When the electronic device 300 cannot switch to the second operating mode, the electronic device 300 may send the physical frame 2 to the VAP 2 in the operating mode B, and add information about the second operating mode to the physical frame 2.

For example, in an 802.11n protocol and an 802.11 protocol cluster after the 802.11n protocol version, the physical frame 2 may include an L-SIG field and an HT-SIG field, and the L-SIG field may carry a quantity of antennas used when the routing device 200 sends the physical frame 2. The HT-SIG field may carry a channel bandwidth and an MCS order that are used when the routing device 200 sends the physical frame 2. For another example, in an 802.11ac protocol and an 802.11 protocol cluster after the 802.11ac protocol version, the physical frame 2 may include a VHT SIG-B field, and the VHT SIG-B field may carry a channel bandwidth and an MCS order that are used when the routing device 200 sends the physical frame 2.

In some embodiments, in a Wi-Fi device (for example, the electronic device 100), a high-specification operating mode may be compatible with a low-specification operating mode. In other words, when a Wi-Fi module in the Wi-Fi device operates in the high-specification operating mode, the Wi-Fi device can support sending and receiving of a physical frame in the high-specification operating mode, and can also support sending and receiving of a physical frame in the low-specification operating mode. However, when the Wi-Fi module in the Wi-Fi device operates in the low-specification operating mode, the Wi-Fi device can only support sending and receiving of a physical frame in the low-specification operating mode. However, the specification of the first operating mode is higher than the specification of the second operating mode. Therefore, after the VAP 1 receives the ACK 1 sent by the routing device 200, the VAP 1 may enter a probing phase, that is, send a physical frame in the second operating mode, and receive a physical frame in the operating mode A. After the VAP 2 receives the ACK 2 sent by the electronic device 300, the VAP 2 may enter a probing phase, that is, send the physical frame in the second operating mode, and receive the physical frame in the operating mode B. In this way, the electronic device 100 can receive the physical frame sent by the routing device 200 or the electronic device 300 in the second operating mode, and can also receive the physical frame sent by the routing device 200 or the electronic device 300 in the original operating mode.

After the VAP 1 may send the physical frame in the second operating mode and receive the physical frame in the operating mode A, the VAP 1 may receive the physical frame 1 sent by the routing device 200, and use the physical frame 1 as the operating mode switching response 1. After the VAP 2 may send the physical frame in the second operating mode and receive the physical frame in the operating mode B, the VAP 2 may receive the physical frame 2 sent by the electronic device 300, and use the physical frame 2 as the operating mode switching response 2.

In this embodiment of this application, when all VAPs in the electronic device 100 successfully negotiate operating mode switching with the peer device (the routing device 200 or the electronic device 300), operating mode switching of the Wi-Fi module in the electronic device 100 succeeds; or if any VAP in the electronic device 100 fails to negotiate operating mode switching with the peer device, operating mode switching of the Wi-Fi module in the electronic device 100 fails. The following step S1015 to step S1021 indicate a switching success scenario, and the following step S1022 to step S1032 indicate a switching failure scenario.

### Scenario 1: switching success.

S1015: After receiving the operating mode switching response 1, the VAP 1 may determine whether the routing device 200 switches to the second operating mode.

S1016: After receiving the operating mode switching response 2, the VAP 2 may determine whether the electronic device 300 switches to the second operating mode.

S1017: After determining that the routing device 200 switches to the second operating mode, the VAP 1 may send a switching success indication 1 to the Wi-Fi management module.

The switching success indication 1 indicates that the VAP 1 successfully switches the operating mode of the routing device 200 to the second operating mode.

S1018: After determining that the electronic device 300 switches to the second operating mode, the VAP 2 may send a switching success indication 2 to the Wi-Fi management module.

The switching success indication 2 indicates that the VAP 2 successfully switches the operating mode of the electronic device 300 to the second operating mode.

S1019: After receiving the switching success indication 1 and the switching success indication 2, the Wi-Fi management module may switch the operating mode of the Wi-Fi module to the second operating mode.

After switching the operating mode of the Wi-Fi module to the second operating mode, the Wi-Fi management module may notify the VAP 1 and the VAP 2 to operate in the second operating mode.

S1020: After switching the operating mode of the Wi-Fi module to the second operating mode, both the VAP 1 and the routing device 200 may receive and send physical frames in the second operating mode.

S1021: After switching the operating mode of the Wi-Fi module to the second operating mode, both the VAP 2 and the electronic device 300 may receive and send physical frames in the second operating mode.

### Scenario 2: switching failure.

S1022: After receiving the operating mode switching response 1, the VAP 1 may determine whether the routing device 200 switches to the second operating mode.

S1023: After receiving the operating mode switching response 2, the VAP 2 may determine whether the electronic device 300 switches to the second operating mode.

S1024: After determining that the routing device 200 successfully switches to the second operating mode, the VAP 1 may send a switching success indication 1 to the Wi-Fi management module.

S1025: After determining that the electronic device 300 does not switch to the second operating mode, the VAP 2 may send a switching failure indication 1 to the Wi-Fi management module.

The switching failure indication 1 indicates that the VAP 2 does not successfully switch the operating mode of the electronic device 300 to the second operating mode.

That the specification of the second operating mode is lower than the specification of the first operating mode may include: the first working mode is a multi-antenna mode, and the second working mode is a single-antenna mode; and/or the first channel bandwidth (for example, 80 MHz) is greater than the second channel bandwidth (for example, 20 MHz); and/or an order of the first MCS (for example, the MCS 10) is greater than an order of the second MCS (for example, the MCS 6).

S1026: The Wi-Fi management module may determine whether the specification of the second operating mode is lower than a specification of the operating mode A.

S1027: If the specification of the second operating mode is lower than the specification of the operating mode A, the Wi-Fi management module may send a switching notification 3 to the VAP 1.

The switching notification 3 may notify the VAP 1 to switch back to the operating mode A.

S1028: After receiving the switching notification 3, the VAP 1 may send an operating mode switching indication 3 to the routing device 200, where the operating mode switching indication 3 indicates to switch to the operating mode A.

S1029: The routing device 200 switches back to the operating mode A after receiving the operating mode switching indication 3.

After receiving the operating mode switching indication 3 in the second operating mode, the routing device 200 may send an acknowledgment frame 3 to the VAP 1 in the second operating mode, where the acknowledgment frame 3 indicates that the routing device 200 has received the operating mode switching indication 3. After the routing device 200 sends the acknowledgment frame 3 in the second operating mode, the routing device 200 switches the operating mode for receiving and sending physical frames back to the operating mode A.

S1030: After switching back to the operating mode A, the routing device 200 may send an operating mode switching response 3 to the VAP 1, where the operating mode switching response 3 indicates a result of switching the operating mode by the routing device 200.

Because the routing device 200 has switched back to the operating mode A, the routing device 200 may send the operating mode switching response 3 to the VAP 1 in the operating mode A.

After receiving the operating mode switching response 3, the VAP 1 may determine that the routing device 200 has switched back to the operating mode A.

S1031: Both the VAP 1 and the routing device 200 receive and send physical frames in the operating mode A.

When the VAP 1 receives the operating mode switching response 3, both the VAP 1 and the routing device 200 receive and send physical frames in the first operating mode.

S1032: Both the VAP 2 and the electronic device 300 receive and send physical frames in the operating mode B.

In some embodiments, if the VAP 1 successfully switches to the second operating mode, the VAP 2 fails to switch to the second operating mode, and the specification of the second operating mode is higher than the specification of the operating mode A, the Wi-Fi management module may not trigger the VAP 1 to switch back to the operating mode A, but continue to keep the VAP 1 operating in the second operating mode.

In some embodiments, when the operating mode switching response 1 indicates that the routing device 200 fails to switch to the second operating mode, and the operating mode switching response 2 indicates that the electronic device 300 successfully switches to the second operating mode, the VAP 1 may send a switching failure indication 2 to the Wi-Fi management module, and the VAP 2 may send a switching success indication 2 to the Wi-Fi management module. The switching failure indication 2 indicates that the VAP 1 fails to switch the operating mode of the routing device 200 to the second operating mode. Therefore, the Wi-Fi management module may determine whether the specification of the second operating mode is lower than a specification of the operating mode B. If the specification of the second operating mode is lower than the specification of the operating mode B, the Wi-Fi management module may notify the VAP 2 to switch back to the operating mode B. If the specification of the second operating mode is higher than the specification of the operating mode B, the Wi-Fi management module may not notify the VAP 2 to switch back to the operating mode B, so that the VAP 2 continues to operate in the second operating mode.

In a possible implementation, after the electronic device 100 fails to switch the operating mode with the routing device 200 and the electronic device 300 once, the electronic device 100 stores information about compatibility with the routing device 200 and the electronic device 300. If the condition for switching the operating mode is met again subsequently, the electronic device 100 no longer attempts to switch the operating mode with the routing device 200 and the electronic device 300.

In a possible implementation, if the specification of the second operating mode is higher than the specification of the operating mode A, the Wi-Fi management module may also notify the VAP 1 to send an operating mode switching indication to the routing device, so that the routing device switches back to the operating mode A.

According to the Wi-Fi operating mode switching method provided in this embodiment of this application, when the first operating mode is switched to the second operating mode in the multi-VAP scenario, a plurality of VAPs in the electronic device 100 can perform operating mode switching handshake with the peer device one by one. Only when all VAPs successfully perform handshake with the peer device, the operating mode of the Wi-Fi module in the electronic device 100 is switched to the second operating mode. If any VAP fails to perform handshake with the peer device, whether to switch back to the first operating mode is determined based on the specification of the second operating mode. In this way, in the multi-VAP connection scenario, operating mode switching can also be performed. In addition, when capabilities of different VAPs are inconsistent, operating mode switching back can be triggered, to ensure that a communication capability is not reduced when the operating mode cannot be switched.

In this embodiment of this application, the electronic device 100 may be referred to as a first electronic device, the electronic device 300 may be referred to as a second electronic device, the routing device 200 may be referred to as a third electronic device, the operating mode switching indication 2 may be referred to as a first switching indication, the operating mode switching indication 1 may be referred to as a second switching indication, and the operating mode switching indication 3 may be referred to as a third switching indication. The operating mode A may be referred to as a third operating mode.

An embodiment of this application further provides a computer-readable storage medium. The computer-readable storage medium stores a computer program. When the computer program is executed by a processor, steps in the foregoing method embodiments may be implemented.

An embodiment of this application further provides a computer program product. When the computer program product runs on a computer, the computer is enabled to perform steps in the foregoing method embodiments.

An embodiment of this application further provides a chip system. The chip system includes a processing circuit and an interface circuit. The interface circuit is configured to receive code instructions and transmit the code instructions to the processing circuit. The processing circuit is configured to run the code instructions, so that the chip system implements the steps in method embodiments of this application. The chip system may be a single chip or a chip module including a plurality of chips.

In conclusion, the foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application.

## Claims

1. A wireless fidelity Wi-Fi operating mode switching method, applied to a first electronic device comprising a Wi-Fi module, wherein the method comprises:
establishing, by the first electronic device, a first Wi-Fi connection to a second electronic device by using the Wi-Fi module;
when an operating mode of the Wi-Fi module is a first operating mode, sending, by the first electronic device, a physical frame to the second electronic device in the first operating mode by using the Wi-Fi module, and receiving, in the first operating mode by using the Wi-Fi module, a physical frame sent by the second electronic device;
sending, by the first electronic device, a first switching indication to the second electronic device in the first operating mode by using the Wi-Fi module, wherein the first switching indication indicates the second electronic device to switch to a second operating mode, and a specification of the first operating mode is higher than a specification of the second operating mode;
sending, by the first electronic device, a physical frame to the second electronic device in the second operating mode by using the Wi-Fi module, and receiving, in the first operating mode, a physical frame sent by the second electronic device; and
switching, by the first electronic device, the operating mode of the Wi-Fi module from the first operating mode to the second operating mode after the first electronic device receives, in the first operating mode by using the Wi-Fi module, a physical frame that is sent by the second electronic device in the second operating mode.

2. The method according to claim 1, wherein sending, by the first electronic device, the physical frame to the second electronic device in the second operating mode by using the Wi-Fi module, and receiving, in the first operating mode, the physical frame sent by the second electronic device specifically comprises:
after the first electronic device receives, in the second operating mode by using the Wi-Fi module, an acknowledgment frame sent by the second electronic device, sending, by the first electronic device, the physical frame to the second electronic device in the second operating mode by using the Wi-Fi module, and receiving, in the first operating mode, the physical frame sent by the second electronic device, wherein the acknowledgment frame indicates that the second electronic device has received the first switching indication.

3. The method according to claim 1 or 2, wherein the method further comprises:
after the first electronic device switches the operating mode of the Wi-Fi module from the first operating mode to the second operating mode, sending, by the first electronic device, the physical frame to the second electronic device in the second operating mode by using the Wi-Fi module, and receiving, in the second operating mode, the physical frame sent by the second electronic device.

4. The method according to any one of claims 1 to 3, wherein the first switching indication may be an action (Action) frame, and the Action frame comprises any one of the following:
a spatial multiplexing power save SMPS frame and an operating mode indicator OMI frame.

5. The method according to any one of claims 1 to 4, wherein that the specification of the first operating mode is higher than the specification of the second operating mode comprises:
a quantity of antennas in the first operating mode is greater than a quantity of antennas in the second operating mode; and/or
a channel bandwidth of the first operating mode is greater than a channel bandwidth of the second operating mode; and/or
an order of a modulation and coding scheme MCS of the first operating mode is greater than an order of an MCS of the second operating mode.

6. The method according to any one of claims 1 to 5, wherein sending, by the first electronic device, the first switching indication to the second electronic device in the first operating mode by using the Wi-Fi module specifically comprises:
if the first electronic device meets a determining condition for entering a low power consumption state, sending, by the first electronic device, the first switching indication to the second electronic device in the first operating mode by using the Wi-Fi module, wherein the determining condition for entering the low power consumption state comprises: a remaining power level of the first electronic device is less than a specified power level, and/or a device temperature of the first electronic device is higher than a specified temperature threshold.

7. The method according to any one of claims 1 to 6, wherein the method further comprises:
establishing, by the first electronic device, a second Wi-Fi connection to a third electronic device;
when the operating mode of the Wi-Fi module is the first operating mode, sending, by the first electronic device, a physical frame to the third electronic device in a third operating mode by using the Wi-Fi module, and receiving, in the third operating mode by using the Wi-Fi module, a physical frame sent by the third electronic device, wherein the specification of the first operating mode is higher than or equal to a specification of the third operating mode; and
sending, by the first electronic device, a second switching indication to the third electronic device in the first operating mode by using the Wi-Fi module, wherein the second switching indication indicates the third electronic device to switch to the second operating mode.

8. The method according to claim 7, wherein after switching, by the first electronic device, the Wi-Fi module from the first operating mode to the second operating mode, the method further comprises:
sending, by the first electronic device, a physical frame to the second electronic device and a physical frame to the third electronic device in the second operating mode by using the Wi-Fi module, and receiving, in the second operating mode, a physical frame sent by the second electronic device and a physical frame sent by the third electronic device.

9. The method according to claim 7 or 8, wherein switching, by the first electronic device, the Wi-Fi module from the first operating mode to the second operating mode after the first electronic device receives, in the first operating mode by using the Wi-Fi module, the physical frame sent by the second electronic device in the second operating mode specifically comprises:
switching, by the first electronic device, the Wi-Fi module from the first operating mode to the second operating mode if the first electronic device receives, in the first operating mode by using the Wi-Fi module, the physical frame sent by the second electronic device in the second operating mode and the physical frame sent by the third electronic device in the second operating mode.

10. The method according to claim 9, wherein after sending, by the first electronic device in the first operating mode by using the Wi-Fi module, the first switching indication to the second electronic device, and sending the second switching indication to the third electronic device, the method further comprises:
if the first electronic device receives, in the first operating mode by using the Wi-Fi module, the physical frame sent by the second electronic device in the first operating mode and the physical frame sent by the third electronic device in the second operating mode, and the specification of the second operating mode is lower than the specification of the third operating mode, sending, by the first electronic device, a third switching indication to the third electronic device, wherein the third switching indication indicates the third electronic device to switch back to the third operating mode.

11. The method according to claim 10, wherein after sending, by the first electronic device, the third switching indication to the third electronic device, the method further comprises:
after receiving, in the first operating mode by using the Wi-Fi module, the physical frame sent by the third electronic device in the third operating mode, keeping, by the first electronic device, the operating mode of the Wi-Fi module as the first operating mode.

12. The method according to claim 10, wherein after keeping, by the first electronic device, the operating mode of the Wi-Fi module as the first operating mode, the method further comprises:
receiving, by the first electronic device in the first operating mode by using the Wi-Fi module, the physical frame sent by the second electronic device in the first operating mode; and
receiving, by the first electronic device in the third operating mode by using the Wi-Fi module, the physical frame sent by the third electronic device in the third operating mode.

13. The method according to any one of claims 7 to 12, wherein that the specification of the first operating mode is higher than or equal to the specification of the third operating mode comprises:
the quantity of antennas in the first operating mode is greater than or equal to the quantity of antennas in the second operating mode; and/or
the channel bandwidth of the first operating mode is greater than or equal to the channel bandwidth of the second operating mode; and/or
the order of the modulation and coding scheme MCS of the first operating mode is greater than or equal to the order of the MCS of the second operating mode.

14. An electronic device, wherein the electronic device is a first electronic device, and comprises one or more processors and one or more memories, wherein the one or more memories are coupled to the one or more processors, the one or more processors comprise a Wi-Fi module, the one or more memories are configured to store a computer program, and when the one or more processors execute the computer program, the method according to any one of claims 1 to 13 is performed.

15. A chip system, used in a first electronic device, wherein the chip system comprises a processing circuit and an interface circuit, the interface circuit is configured to receive code instructions and transmit the code instructions to the processing circuit, and the processing circuit is configured to run the code instructions, so that the chip system is enabled to perform the method according to any one of claims 1 to 13.

16. A computer-readable storage medium, storing a computer program, wherein when the computer program runs on a processor of a first electronic device, the method according to any one of claims 1 to 13 is performed.
